# EUROPEAN PATENT SPECIFICATION

(11) **EP 3 756 897 B1**
(45) Date of publication and mention of the grant of the patent: **14.12.2022**
(21) Application number: 20182117.0
(22) Date of filing: 24.06.2020
(51) Int. Cl.: B41J 11/00

(54) **PRINT SUBSTRATE OPTICAL MOTION SENSING AND DOT CLOCK GENERATION**
OPTISCHE BEWEGUNGSERFASSUNG EINES DRUCKSUBSTRATS UND PUNKTTAKTERZEUGUNG
DÉTECTION OPTIQUE DE MOUVEMENT DE SUBSTRAT D'IMPRESSION ET GÉNÉRATION D'HORLOGE DE POINT

(30) Priority: 26.06.2019 US 201916452976
(43) Date of publication of application: 30.12.2020
(73) Proprietor: Xerox Corporation, Webster, NY 14580 (US)
(72) Inventor: KNIERIM, David L., Wilsonville, OR Oregon 97070 (US)
(74) Representative: Gill Jennings & Every LLP

(56) References cited:
- US-A1- 2017 266 965

## Description

### TECHNICAL FIELD

This disclosure relates to printing on moving substrates, more particularly to generation of a dot clock based upon motion of the substrate.

### BACKGROUND

Direct printing of substrates involves a print head depositing ink onto a substrate at the correct position. This means that the printer needs to know the position and velocity of the substrate in order to trigger the print head to deposit the ink at the correct time and in the correct place to form an image.

When the printer accurately constrains the substrate, as in an enclosed sheet feed system familiar as desktop and office printers, the printer typically tracks substrate motion by measuring motion of a roller or belt that is engaged against the substrate. This may be a belt or roller that moves the substrate, or a separate roller that is moved by the substrate. Substrate motion may also be inferred by counting steps of a stepper motor used to drive a roller or belt that moves the substrate. Roller motion measurement is typically by an optical encoder consisting of an encoder and encoder wheel. Just as an example, the printer may have a rotary encoder wheel and encoder on a roller that feeds the substrate into the printer. The encoder wheel will contain a pattern of marks on its surface. The encoder portion typically includes a light source and photosensors to detect the presence or absence of the marks at a rate that allows the system to determine the speed of the substrate and allows control of the printing process. The motion of the substrate may be referred to as the print or process direction.

Some printers have a stationary set of one or more print heads covering the entire width of the printed image in the cross-process (lateral) direction. Desktop printers often use smaller print head(s) that shuttle laterally across the substrate. To track lateral motion of the print head, a linear encoder may be used. A linear encoder works similarly to the rotatory encoder but the encoder strip is typically a linear piece of polyester or other material that contains the marks. The light source and photosensors may be mounted to the print head and move relative to the strip. This allows the controller to know how fast the print head is traveling and allows the print head to print the ink at the correct time.

Using two encoders and two encoder patterns can drive up the cost of the printer. One embodiment, as shown in US Patent 6,246,050, uses images of a fixed feature of the printer itself instead of the patterned strip to allow determination of the position of the print head and its movement. However, this type of approach is not precise enough for practical printing use.

US-A-20170266965 discloses a liquid ejection apparatus that includes a plurality of liquid ejection head units that are configured to eject liquid onto a conveyed object being conveyed; a detection unit that is provided with respect to each liquid ejection head unit of the plurality of liquid ejection head units and is configured to output a detection result indicating at least one of a position, a moving speed, and an amount of movement of the conveyed object with respect to a conveying direction of the conveyed object; and a control unit configured to control each liquid ejection head unit of the plurality of liquid ejection head units to eject liquid at a timing based on a plurality of the detection results of a plurality of the detection units.

For larger systems, in which the substrates are not contained within a housing or casing while being printed, position and movement detection becomes even more difficult. One approach relies upon the speed of the conveyor belt upon which the substrates move past the print head for printing, as in printing on cardboard boxes. In another approach, a springloaded encoder roller rolls against the boxes as they pass in front of the print head.

### SUMMARY

According to aspects illustrated here, there is provided a system to direct print onto print substrates having a print head, at least one optical image sensor arranged adjacent a print substrate, wherein the print substrate will move in a process direction past the print head, a telecentric lens arranged between the print substrate and the image sensor, and control circuitry electrically connected to the optical image sensor and the print head, the control circuitry to generate dot clocks to cause the print head to print onto the substrate based upon data from the image sensor identifying a position of the print substrate.

According to aspects illustrated here, there is provided a method of printing on a moving substrate using a system according to claim 1 that includes acquiring image data of a print substrate from an image sensor, using the image data to determine a velocity of the print substrate, generating a dot clock based upon the velocity of the print substrate, and transmitting the dot clock to a print head to cause the print head to dispense ink onto the print substrate.

### BRIEF DESCRIPTION OF THE DRAWINGS

Figure 1 shows an embodiment of a print head having a print substrate tracking system.
Figure 2 shows an embodiment of a print substrate tracking system located adjacent the print head.
Figure 3 shows an aperture of a telecentric lens used to image the print substrate onto an image sensor.
Figure 4 shows an embodiment of the image sensor having elongated pixels.
Figure 5 shows an embodiment of two illumination sources as part of a print substrate tracking system.
Figure 6 shows options for illumination source intensity vs. time profiles.
Figure 7 shows a flowchart of an embodiment of a method to track a print substrate.

### DETAILED DESCRIPTION OF THE EMBODIMENTS

The embodiments here consists of a combination of several components. The components may include a linear optical image sensor, a lens to project an image of a print substrate onto the image sensor, illumination for a portion of the substrate viewed by the image sensor, and electronics to generate dot clocks in response to the image sensor data. The combination of image sensor, lens and illumination may be referred to as the print substrate tracking, or just tracking, system. The tracking system will typically be mounted adjacent to a print head.

The "process direction" is the direction in which the substrate moves under or in front of the print head. The "cross process direction" is a direction that is substantially perpendicular to the process direction. The term 'print substrate' comprises any movable surface upon which ink can be deposited.

The term "print head" typically comprises a drop generator, such as a jet stack. A jet stack generally consists of a stack of plates having manifolds to route ink to an array of nozzles that selectively dispense ink depending upon the image data when they receive a signal. The signals are generated by a dot clock generator. As used here, the term 'dot clock' is the signal sent to the jet stack or other drop generator to cause the selected nozzles in the jet stack or drop generator to dispense dots of ink.

One should note that the print head, print substrate tracking system, and print substrate are shown in various orientations here. No limitation to any particular orientation is intended nor should any be implied.

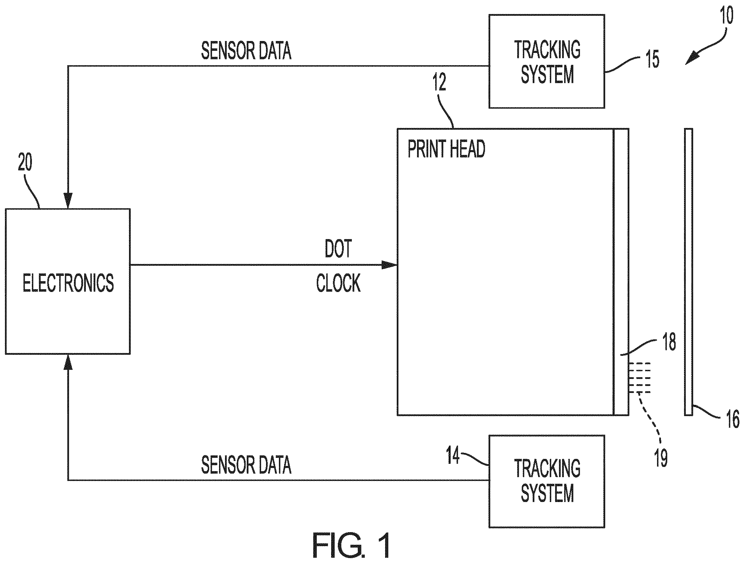

Figure 1 shows an embodiment of a print head 12 with a print substrate tracking system 14 as an integrated system 10. The print substrate tracking system is typically mounted adjacent to the print head. The print head includes a jet stack or other drop generator 18, which may include an array of jets or nozzles 19. The electronics 20 for the tracking system, which may be integrated into the control electronics of the printing system, or may be separate control electronics used only for the tracking systems. The electronics receive image data from the sensors and use that data to generate dot clocks that will then provide the signal to cause the drop generator to dispense ink on the substrate 16. The system may have one tracking system such as 14 or two tracking systems such as 14 and 15, on opposite sides of the print head. In the case of the use of one image sensor, it may be located in one of several places relative to the print head. Alternatively, there may just be two imaging systems with only one set of electronics.

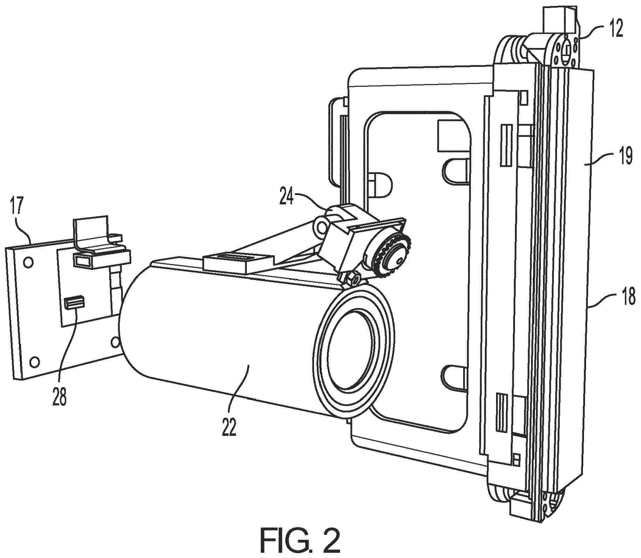

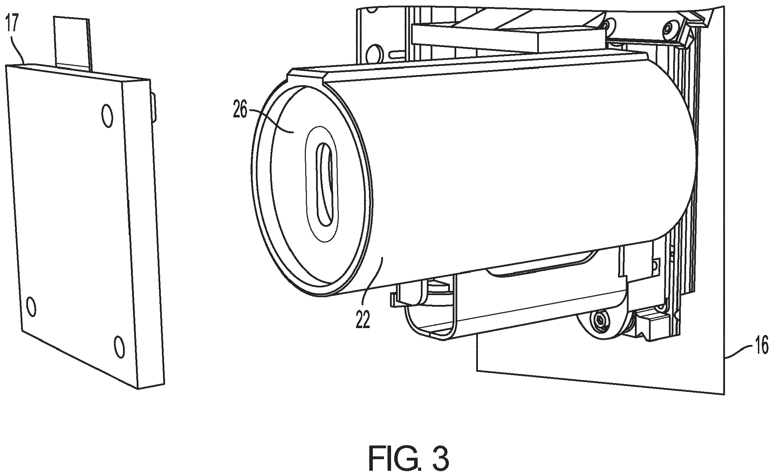

Figures 2 and 3 show more detailed views of the system 10. Figure 2 shows the print head 12 without the substrate, to give a better view of the jet stack 18 and is array of nozzles 19. Figure 3 shows a closer view of the telecentric lens 22 and its aperture 26 between the image sensor mounting 17 and the substrate 16.

Generally, the tracking system 14 of Figure 1 will include four components: a linear optical image sensor, a telecentric lens, illumination, and electronics to generate dot clocks in response to image sensor data. In this embodiment the tracking system comprises a telecentric lens 22, at least one illumination source 24, and an image sensor 28 and its mounting 17. The telecentric lens 22 may include an aperture 26, either internal or external to other lens elements, shown in Figure 3. The lens 22, with or without the aperture 26, provides an image of the print substrate 16 to the image sensor.

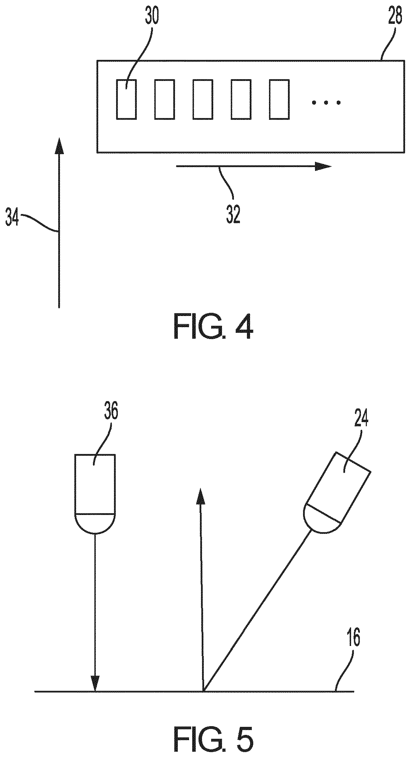

The linear image sensor 28 may have high-aspect ratio pixels. As shown in Figure 4, the pixels such as 30 are longer in the cross-process direction and shorter in the process direction. The process direction is shown as arrow 32 and the cross process direction is shown as arrow 34. The elongated pixels collect more light, improving the signal-to-noise ratio, and reduce sensitivity to substrate motion that is not exactly parallel to the process direction axis of the image sensor. In one embodiment, the length to width ratio is approximately 50:1.

The image sensor also needs a reasonably high frame (line) rate. It needs not be higher than the dot clock frequency. In one embodiment, for example, the image sensor uses a 6 kHz frame rate to generate 64 kHz dot clocks. 6 kHz will typically be fast enough to track velocity changes of the print substrate. The measured velocity feeds a rate-generator to make the 64 kHz dot clock. The dot clock will vary from 64 kHz as the velocity of the print substrate varies. This assists with maintaining printed dot positions.

The lens comprises a telecentric lens, meaning its entrance pupil is at infinity, in its object space. In this case the object space is the print substrate side of the lens, making optical magnification independent of substrate-to-lens distance. This improved tolerance to substrate warpage or placement error. Variation in substrate-to-lens distance corresponds to variation in substrate-to-print-head distance, so should be reasonably well controlled to maintain print quality. The telecentricity precision of the lens need not be too high, keeping lens cost low. As long as the image sensor to lens distance is precise, there is no need for the lens to be doubly telecentric, although that may be an option.

Variations in lens-to-substrate distance will cause focus errors, known as blur, even with a telecentric lens. A slower lens, meaning a smaller aperture, will increase the depth-of-field, but gather less light. For the embodiments here, focus is important along the motion axis or the process direction, but much less so along the perpendicular axis where the image sensor pixels are elongated. To optimize both depth-of-field and light gathering, a slit aperture may work better, with the slit width along the motion axis, or process direction, shorter than the slit height perpendicular to the motion direction, or cross-process direction. As shown in Figure 3, the aperture is separated but will generally be part of the lens assembly.

The tracking system may include at least one illumination source, as shown in Figure 5, and may be arranged at a glancing angle as shown at illumination source 24. Glancing illumination converts physical texture on the print substrate 16 into optical texture. For precision encoding, glancing-angle illumination must be with parallel light rays, or at least where the distribution of incident ray angles is uniform across the imaged area. Otherwise, the angles of texture shadows change with substrate position, which causes the optical texture to move faster or slower than the print substrate depending on the direction of angle change. Illumination from a steeper angle, closer to perpendicular to the substrate surface as in illumination source 36, drastically reduces the need for parallel light rays, but also reduces the image contrast for typical print substrates. Shallow and steep illumination angles both function acceptably in the prototype. Intensity uniformity is less important than angle uniformity. Intensity variations can be corrected with pixel value scaling in the electronics, based on an initial calibration.

Illumination may be strobed at the image sensor frame rate. The substrate may move pixels from one frame to the next, up to some number. In one embodiment, up to 51 pixels moved from one frame to the next. This is excessive motion blur for accurate velocity measurement. Some degree of motion blur has advantages, such as removing spatial frequencies above the Nyquist spatial frequency of the image sensor. The illumination strobe pulse width may be adjusted based on the expected or measured velocity to result in the optimum amount of low-pass filtering from motion blur. A simple on/off pulse of illumination will result in a rectangular impulse response filter, often call a "box-car" filter. Controlling illumination brightness in a Gaussian intensity-vs-time profile will result in Gaussian image blur. This approach works efficiently, but has a higher complexity of implementation. A Gaussian filter can be approximated using simple on/off control and dutycycle modulation.

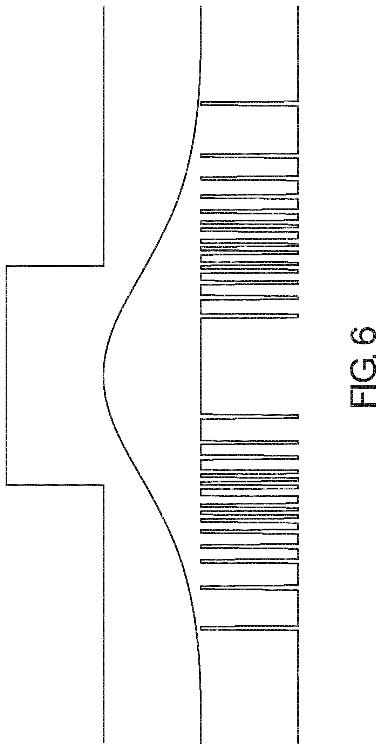

Intensity vs. time plots of these three illumination options are shown in Figure 6. The box-car illumination strobe option, the top trace, may be sufficient for many applications. Gaussian, the middle trace, or simulated-Gaussian, the third trace, will further reduce Nyquist aliasing for the highest precision.

The electronics 20 from Figure 1 will process the image data from the sensor, generating dot clocks in response to the print substrate motion. In one embodiment, the electronics comprise an analog-to-digital (ADC) converter and a field-programmable gate array (FPGA), along with conventional support circuitry around them, such as a clock oscillator, DC supply voltages, bypass capacitors, etc.

Linear image sensors typically output pixel values sequentially after the expose time window is complete, often simultaneously with the next frame's exposure window. To minimize latency, the electronics may process each new pixel value as it comes in, providing updated position and velocity information after the last pixel of an image frame is read from the sensor. Reduced latency provides faster response to changes in print substrate velocity, minimizing printed drop placement errors.

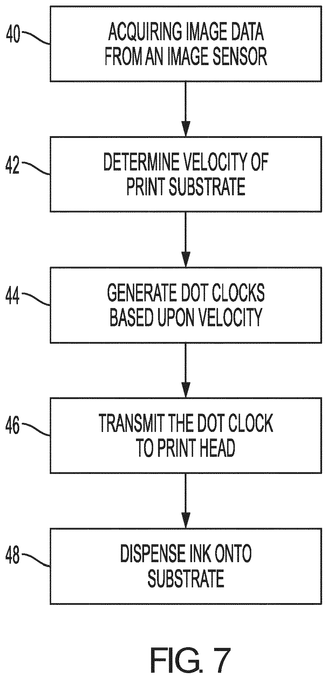

Figure 7 shows a flow chart of an embodiment of a general method of tracking a print substrate. Initially, the image sensor provides image data to the control electronics at 40. The control electronics then process the image data to determine the velocity of the print substrate at 42. Using the velocity, the control electronics generate the dot clocks at 44. The dot clocks are then transmitted from the electronics to the drop generator at 46. The drop generators then dispense ink onto the substrate at 48.

This process may encompass several sub-processes. For example, the electronics may apply compensation such as subtracting per-pixel black offset, which compensates for image sensor black-level pattern noise. The electronics may also apply per-pixel scale to compensate for image sensor sensitivity and for illumination spatial variations.

Additionally, the image data may undergo filtering. For example, the process may apply a high-pass filter to the image or pixel data. In one embodiment, the filter is applied by dividing each pixel by a Gaussian-weighted average of its neighboring pixels. In one embodiment, 64 neighboring pixels are used, 32 on each side. Dividing by the weighted average rather than subtracting it reduces sensitivity to local variations in illumination intensity as might be caused by warp of the print substrate. It also cancels global illumination variation, such as from LED power supply noise.

The image data from the sensor may have its resolution increased by interpolating the image data. In one embodiment the data is interpolated by 8 times using a Gaussian low-pass interpolation filter. The process then stores the integer-pixel-position values for correlating with the next frame. In one embodiment, these values are after the weighted average low-pass filter, even though they are at the non-interpolated pixel locations. This keeps the frequency response identical between the interpolated and integer pixel values.

The process then calculates some predetermined number, such as 32, "coarse" correlations between the incoming pixel values and the ones stored from the previous frame. In one embodiment, the correlation is a sum of differences squared rather than a true correlation. These "coarse" correlations are done at position offsets, for example of -10 through +52 pixels, between the incoming line image and the stored previous line image. Negative offsets need not be included, but are convenient for testing.

The process then finds the maximum correlation, in one embodiment meaning the minimum sum-of-differences-squared, of the coarse correlations. This may be achieved by fitting a parabola to this minimum and its neighboring two correlations, one on each side. The process can determine a coarse velocity, meaning the position change from the previous image frame to this frame, by the position of the parabola minimum.

The process can then calculate a predetermined number of "fine" correlations between the incoming interpolated pixel values and the pixel values stored from the previous frame. Again, the correlation may be a sum of differences squared rather than a true correlation. These "fine" correlations may be done at sub-pixel offsets, such as 1/8th pixel position offsets, centered near the coarse correlation position determined above for the previous frame. The process does not use the current frame's coarse correlation because it is not known until all of this frame's pixel data is read. Using the previous frame's coarse correlation position allows fine correlation to process pixel data as it comes in, reducing latency.

The process then repeats finding the maximum correlation using the parabola analysis above, but now applied to the fine correlations. This results in a determination of a fine velocity, position change from the previous image frame to this frame, by the position of the parabola minimum. The process may add in the coarse offset from the previous frame used to locate the pixel-offset range for this set of fine correlations. Optionally, the process may apply a low-pass filter to the fine velocity values to smooth any jitter in velocity values, but such filtering does increase latency.

Using the fine velocity, or the filtered fine velocity, in a rate generator produces dot clocks to trigger print head drop ejection. For example, add the fine velocity value to an accumulator at a fixed rate, for example 72 MHz Each time the accumulator overflows, the process outputs a dot clock and subtracts a dot-spacing constant from the accumulator. The dot-spacing constant is proportional to the desired spacing between printed dots. For example, if the image sensor frame time is N 72 MHz clocks, then a dot-spacing constant value of N would generate dot clocks at the same spacing as image sensor pixel spacing, assuming a 1:1 lens magnification. A dot-spacing constant of 2N would generate dot clocks at twice the image sensor pixel spacing.

One should note that there will be fractional-pixel bits to the fine velocity. The accumulator and constant need to have the same number of fraction bits. Dot clock spacing is not restricted to integer ratios of image sensor pixel spacing.

The number of coarse and fine correlations, 32 each in the embodiments above, could be smaller. The process may also skip the coarse correlations, using the previous frame's fine correlation location to center the current frame's fine correlation range. This embodiment may require a way to initialize the fine correlation range, such as a sweep-search after each new image substrate comes into view.

Besides generating dot clocks, the image sensor can be used to detect the presence of a print substrate. When a substrate is not present, illumination will not align with whatever surface(s) may lie past the normal print substrate location, so little light will reach the image sensor. This dark condition indicates the absence of a print substrate. In one embodiment, this feature is being used to sense the beginning of each print substrate to trigger the start of a new image.

Many variations and modifications exist and contained within the scope of the claims. For example, it is desirable to sense print substrate motion at a location close to the print head. This minimizes the unprinted margin at the end of each substrate. A small mirror could be added to the optical path close to the print substrate, allowing the remainder of the mechanism to pivot away from the print head.

The optical sensor could be positioned above or below the print head(s) if there is more unprinted margin there. This is described for the case of a vertical print substrate orientation with horizontal print motion, or horizontal process direction. Other orientations are equally possible, such as a horizontal print substrate and down-shooting print head(s), as noted above.

For use with thin print substrates, such as cardboard before being folded into a box, this sensor could view the print substrate from the opposite side relative to the print head. Sensing could be located immediately behind the print head(s), as long as no significant image bleed-through occurs, at least not until after the substrate moves past the sensor.

Another option to reduce non-printed margins is to use two sensors, one on each side of the print head. The two sensors could each be part of their own tracking system or share the electronics and/or other components between them. Velocity inputs to the dot clock generator would switch from one sensor to the other as the substrate moves past the print head(s). The switching could be based on which sensor detects a higher average image intensity, as an indication of which sensor has a complete image of the print substrate.

A SELFOC^{®} lens array, comprising an array of microlenses, might be workable as a small low-cost alternative to a telecentric lens. It would likely have motion artifacts due to the lens element pitch, but such artifacts may be tolerable for some applications.

In one embodiment the telecentric lens consisted of a pair of 35 mm slide projector lenses joined front-to-front, combined with an aperture located to make it object-side telecentric. This lens assembly may be much larger than a final system needs to use. The large lens could be advantageous in a few applications, with its 80 mm standoff from lens to print substrate, but any size lens could be employed and be within the scope of the claims.

In this manner, a high efficiency, low latency printing system with print substrate tracking can be realized. The tracking system may have its electronics physically integrated with the image sensor and lens, or may share electronics with other parts of the printing system.

## Claims

1. A system to direct print onto print substrates, comprising:
a print head (12), wherein a print substrate (16) will move in a process direction past the print head; **characterized by**
at least one optical image sensor (28) arranged adjacent the print substrate (16);
at least one telecentric lens (22) arranged between the print substrate (16) and the at least one image sensor(28); and
control circuitry (20) electrically connected to the at least one optical image sensor (28) and the print head (12), the control circuitry to generate dot clocks to cause the print head to print onto the substrate (16) based upon data from the at least one optical image sensor identifying a position of the print substrate.

2. The system as claimed in claim 1, further comprising at least one illumination source (24) positioned to provide light to a region of the print substrate (16) viewed by the at least one image sensor (28).

3. The system as claimed in claim 2, wherein at least one of the at least one illumination sources (24) is positioned at a glancing angle to the print substrate.

4. The system as claimed in claim 2, wherein the at least one illumination source (24) consists of at least two illumination sources, one positioned at a glancing angle to the print substrate and the other positioned closer to perpendicular to the print substrate.

5. The system as claimed in claim 2, wherein the at least one illumination source (24) is strobed.

6. The system as claimed in claim 1, wherein the at least one telecentric lens (22) includes an aperture that is shorter in the process direction than in a cross-process direction.

7. The system as claimed in claim 1, wherein the at least one optical image sensor (28) has rectangular pixels, shorter in the process direction than in a cross-process direction.

8. The system as claimed in claim 1, wherein the at least one image sensor (28) comprises two image sensors, each image sensor located on opposite sides of the print head (12) from the other image sensor.

9. A method of printing on a moving substrate using a system according to claim 1, the method comprising:
acquiring image data of a print substrate (16) from the at least one optical image sensor (28);
using the image data to determine a velocity of the print substrate (16);
generating a dot clock based upon the velocity of the print substrate (16); and
transmitting the dot clock to the print head (12) to cause the print head to dispense ink onto the print substrate (16).

10. The method of claim 9, further comprising illuminating a region of the print substrate (16) from which the image data is acquired.

11. The method of claim 9, wherein illuminating a region comprises strobing a light source with a Gaussian strobe pulse shape.

12. The method of claim 9, further comprising applying a high pass filter to the image data.

13. The method of claim 12, wherein applying a high pass filter to the image data comprises dividing each pixel value by a Gaussian-weighted average of neighboring pixel values.

14. The method of claim 9, further comprising interpolating the image data by a scale factor using a Gaussian low-pass interpolation filter.

15. The method of claim 9, wherein acquiring image data of the print substrate (16) comprises acquiring two frames of image data of the print substrate.

16. The method of claim 15, wherein using the image data to determine the velocity of the print substrate (16) comprises comparing the two frames of image data to determine the velocity.

17. The method of claim 9, wherein using the image data comprises determining a coarse correlation between incoming pixel values and pixel values from a next most previous frame to determine an estimated substrate velocity.

18. The method of claim 17, further comprising determining a fine correlation between the incoming pixel values and the pixel values from the next most previous frame to determine the velocity of the print substrate (16).

19. The method of claim 9, further comprising using the image data to determine when no print substrate (16) is present.

## Patentansprüche

1. System zum direkten Bedrucken von Drucksubstraten, das umfasst:
einen Druckkopf (12), wobei sich ein Drucksubstrat (16) in einer Prozessrichtung an dem Druckkopf vorbei bewegt; **gekennzeichnet durch**
wenigstens einen optischen Bildsensor (28), der an das Drucksubstrat (16) angrenzend angeordnet ist;
wenigstens eine telezentrische Linse (22), die zwischen dem Drucksubstrat (16) und dem wenigstens einen Bildsensor (28) angeordnet ist; sowie
eine Steuerschaltung (20), die elektrisch mit dem wenigstens einen optischen Bildsensor (28) und dem Druckkopf (12) verbunden ist, wobei die Steuerschaltung Pixeltakte (dot clocks) erzeugt, um den Druckkopf zu veranlassen, auf Basis von Daten von dem wenigstens einen optischen Bildsensor, die eine Position des Drucksubstrats identifizieren, auf das Substrat (16) zu drucken.

2. System nach Anspruch 1, das des Weiteren wenigstens eine Beleuchtungsquelle (24) umfasst, die so positioniert ist, dass sie einem Bereich des Drucksubstrats (16) Licht zuführt, der von dem wenigstens einen Bildsensor (28) gesehen wird.

3. System nach Anspruch 2, wobei wenigstens eine der wenigstens einen Beleuchtungsquelle (24) in einem Auftreffwinkel zu dem Drucksubstrat positioniert ist.

4. System nach Anspruch 2, wobei die wenigstens eine Beleuchtungsquelle (24) aus wenigstens zwei Beleuchtungsquellen besteht, von denen eine in einem Auftreffwinkel zu dem Drucksubstrat positioniert ist und die andere näher an der Senkrechten zu dem Drucksubstrat positioniert ist.

5. System nach Anspruch 2, wobei die wenigstens eine Beleuchtungsquelle (24) blitzend leuchtet.

6. System nach Anspruch 1, wobei die wenigstens eine telezentrische Linse (22) eine Apertur enthält, die in der Prozessrichtung kürzer ist als in einer Querrichtung.

7. System nach Anspruch 1, wobei der wenigstens eine optische Bildsensor (28) rechteckige Pixel aufweist, die in der Prozessrichtung kürzer sind als in einer Querrichtung.

8. System nach Anspruch 1, wobei der wenigstens eine Bildsensor (28) zwei Bildsensoren umfasst, und jeder Bildsensor an von dem anderen Bildsensor gegenüberliegenden Seiten des Druckkopfes (12) angeordnet ist.

9. Verfahren zum Drucken auf ein sich bewegendes Substrat unter Verwendung eines Systems nach Anspruch 1, wobei das Verfahren umfasst:
Erfassen von Bilddaten eines Drucksubstrats (16) von dem wenigstens einen optischen Bildsensor (28);
Verwenden der Bilddaten zum Bestimmen einer Geschwindigkeit des Drucksubstrats (16);
Erzeugen eines Pixeltaktes auf Basis der Geschwindigkeit des Drucksubstrats (16); und Übertragen des Pixeltaktes zu dem Druckkopf (12), um den Druckkopf zu veranlassen, Tinte auf das Drucksubstrat (16) abzugeben.

10. Verfahren nach Anspruch 9, das des Weiteren Beleuchten eines Bereiches des Drucksubstrats (16) umfasst, aus dem die Bilddaten erfasst werden.

11. Verfahren nach Anspruch 9, wobei Beleuchten eines Bereiches blitzendes Aufleuchten einer Lichtquelle mit einer Gaußschen Stroboskopimpuls-Form umfasst.

12. Verfahren nach Anspruch 9, das des Weiteren Anwenden eines Hochpassfilters auf die Bilddaten umfasst.

13. Verfahren nach Anspruch 12, wobei Anwenden eines Hochpassfilters auf die Bilddaten Dividieren jedes Pixelwertes durch einen Gaußscher Gewichtung unterzogenen Durchschnitt benachbarter Pixelwerte umfasst.

14. Verfahren nach Anspruch 9, das des Weiteren Interpolieren der Bilddaten mit einem Skalenfaktor unter Verwendung eines Gaußschen Tiefpass-Interpolationsfilters umfasst.

15. Verfahren nach Anspruch 9, wobei Erfassen von Bilddaten des Drucksubstrats (16) Erfassen zweier Rahmen von Bilddaten des Drucksubstrats umfasst.

16. Verfahren nach Anspruch 15, wobei Verwenden der Bilddaten zum Bestimmen der Geschwindigkeit des Drucksubstrats (16) Vergleichen der zwei Rahmen von Bilddaten zum Bestimmen der Geschwindigkeit umfasst.

17. Verfahren nach Anspruch 9, wobei Verwenden der Bilddaten Bestimmen einer Grobkorrelation zwischen eingehenden Pixelwerten und Pixelwerten von einem am nächsten liegenden vorhergehenden (next most previous) Rahmen zum Bestimmen einer geschätzten Substratgeschwindigkeit umfasst.

18. Verfahren nach Anspruch 17, das des Weiteren Bestimmen einer Feinkorrelation zwischen den eingehenden Pixelwerten und den Pixelwerten von dem am nächsten liegenden vorhergehenden Rahmen zum Bestimmen der Geschwindigkeit des Drucksubstrats (16) umfasst.

19. Verfahren nach Anspruch 9, das des Weiteren Verwenden der Bilddaten zum Bestimmen umfasst, wenn kein Drucksubstrat (16) vorhanden ist.

## Revendications

1. Système destiné à orienter une impression vers des substrats d'impression, qui comprend :
une tête d'impression (12), dans lequel un substrat d'impression (16) se déplace dans une direction de traitement qui va au-delà de la tête d'impression ; **caractérisé par**
au moins un capteur d'image optique (28) prévu de manière adjacente au substrat d'impression (16) ;
au moins une lentille télécentrique (22) prévue entre le substrat d'impression (16) et le au moins un capteur d'image (28) ; et
des circuits de commande (20) reliés électriquement au au moins un capteur d'image optique (28) et à la tête d'impression (12), dans lequel les circuits de commande sont destinés à générer des horloges de point afin de permettre à la tête d'impression d'imprimer sur le substrat (16) sur la base de données qui proviennent du au moins un capteur d'image optique en identifiant une position du substrat d'impression.

2. Système selon la revendication 1, qui comprend en outre au moins une source d'éclairage (24) positionnée afin de fournir de la lumière à une zone du substrat d'impression (16) vue par le au moins un capteur d'image (28).

3. Système selon la revendication 2, dans lequel au moins l'un de la au moins une source d'éclairage (24) est positionné à un angle rasant par rapport au substrat d'impression.

4. Système selon la revendication 2, dans lequel la au moins une source d'éclairage (24) se compose d'au moins deux sources d'éclairage, une positionnée à un angle rasant par rapport au substrat d'impression et l'autre positionnée plus proche de la perpendiculaire par rapport au substrat d'impression.

5. Système selon la revendication 2, dans lequel la au moins une source d'éclairage (24) est stroboscopique.

6. Système selon la revendication 1, dans lequel la au moins une lentille télécentrique (22) comprend une ouverture qui est plus courte dans la direction de traitement que dans une direction de traitement croisé.

7. Système selon la revendication 1, dans lequel le au moins un capteur d'image optique (28) possède des pixels rectangulaires, plus courts dans la direction de traitement que dans une direction de traitement croisé.

8. Système selon la revendication 1, dans lequel le au moins un capteur d'image (28) comprend deux capteurs d'image, dans lequel chaque capteur d'image est situé sur les côtés opposés de la tête d'impression (12) par rapport à l'autre capteur d'image.

9. Procédé d'impression sur un substrat en mouvement à l'aide d'un système selon la revendication 1, dans lequel le procédé comprend :
l'acquisition de données d'image d'un substrat d'impression (16) depuis le au moins un capteur d'image optique (28) ;
l'utilisation des données d'image pour déterminer une vitesse du substrat d'impression (16) ;
la génération d'une horloge de point sur la base de la vitesse du substrat d'impression (16) ; et
la transmission de l'horloge de point à la tête d'impression (12) afin de permettre à la tête d'impression de distribuer de l'encre au substrat d'impression (16).

10. Procédé selon la revendication 9, qui comprend en outre l'éclairage d'une zone du substrat d'impression (16) à partir de laquelle les données d'image sont acquises.

11. Procédé selon la revendication 9, dans lequel l'éclairage d'une zone comprend l'application d'un effet stroboscopique à une source de lumière avec une forme d'impulsion stroboscopique gaussienne.

12. Procédé selon la revendication 9, qui comprend en outre l'application d'un filtre passe-haut aux données d'image.

13. Procédé selon la revendication 12, dans lequel l'application d'un filtre passe-haut aux données d'image comprend la division de chaque valeur de pixel par une moyenne à pondération gaussienne des valeurs du pixel voisin.

14. Procédé selon la revendication 9, qui comprend en outre l'interpolation des données d'image par un facteur d'échelle à l'aide d'un filtre d'interpolation passe-bas gaussien.

15. Procédé selon la revendication 9, dans lequel l'acquisition des données d'image du substrat d'impression (16) comprend l'acquisition de deux trames de données d'image du substrat d'impression.

16. Procédé selon la revendication 15, dans lequel l'utilisation des données d'image pour déterminer la vitesse du substrat d'impression (16) comprend la comparaison des deux trames des données d'image afin de déterminer la vitesse.

17. Procédé selon la revendication 9, dans lequel l'utilisation des données d'image comprend la détermination d'une corrélation grossière entre les valeurs de pixels entrantes et les valeurs de pixels issues d'une trame suivante la plus antérieure afin de déterminer une vitesse de substrat estimée.

18. Procédé selon la revendication 17, qui comprend en outre la détermination d'une corrélation fine entre les valeurs de pixels entrantes et les valeurs de pixels issues de la trame suivante la plus antérieure afin de déterminer la vitesse du substrat d'impression (16).

19. Procédé selon la revendication 9, qui comprend en outre l'utilisation des données d'image afin de déterminer le moment auquel aucun substrat d'impression (16) n'est présent.
